(19) Europäisches Patentamt
European Patent Office
Office européen des brevets

(11) **EP 4 471 393 A1**

(12) **EUROPEAN PATENT APPLICATION**

(43) Date of publication:
**04.12.2024 Bulletin 2024/49**

(21) Application number: **24174707.0**

(22) Date of filing: **08.05.2024**

(51) International Patent Classification (IPC):
**G01K 7/42** *(2006.01)*   **G01K 15/00** *(2006.01)*
**G01K 3/06** *(2006.01)*   **G01K 3/14** *(2006.01)*

(52) Cooperative Patent Classification (CPC):
**G01K 15/005; G01K 3/06; G01K 3/14; G01K 7/427;
H05B 45/18;** G01K 2213/00; G01K 2217/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.05.2023   JP 2023089156**

(71) Applicant: **Nichia Corporation
Anan-shi, Tokushima 774-8601 (JP)**

(72) Inventors:
• **KAGEYAMA, Yoshiyuki
Anan-shi, Tokushima 774-8601 (JP)**
• **YAMAJI, Yoshiki
Anan-shi, Tokushima 774-8601 (JP)**
• **KURODA, Hiroaki
Anan-shi, Tokushima 774-8601 (JP)**
• **SANGA, Daisuke
Anan-shi, Tokushima 774-8601 (JP)**
• **SHINOHARA, Hisahiro
Anan-shi, Tokushima 774-8601 (JP)**
• **KITAMOTO, Yuya
Anan-shi, Tokushima 774-8601 (JP)**

(74) Representative: **Betten & Resch
Patent- und Rechtsanwälte PartGmbB
Maximiliansplatz 14
80333 München (DE)**

(54) **METHOD FOR ESTIMATING TEMPERATURE OF LIGHT EMITTING MODULE, LIGHT EMITTING MODULE, AND AUTOMOTIVE UNIT**

(57)   A method for estimating a temperature of a light emitting module having a plurality of light emitting elements is provided. The method includes based on a lighting pattern of the light emitting module, which represents an intensity of light emitted from each of the plurality of light emitting elements, determining an amount of electric power to be supplied to the light emitting module for obtaining the lighting pattern and based on the lighting pattern and the determined amount of electric power, calculating estimated temperatures of the plurality of light emitting elements that are operated in accordance with the lighting pattern.

FIG. 9

EP 4 471 393 A1

**Description**

FIELD

Certain embodiments of the present disclosure relate to a method for estimating a temperature of a light emitting module, a light emitting module, and an automotive unit.

BACKGROUND

In a light emitting module, a large number of light emitting elements mounted on a single wiring board are respectively controlled. In such a light emitting module, it is preferable to estimate the temperature of each light emitting element when lit in order to manage the temperature of each light emitting element so as not to exceed an upper limit for practical use. It is difficult, however, to respectively estimate temperatures of the light emitting elements because the magnitude of temperature increase varies among the light emitting elements depending on the lighting pattern.

BRIEF DESCRIPTION OF THE DRAWINGS

A more complete appreciation of embodiments of the invention and many of the attendant advantages thereof will be readily obtained by reference to the following detailed description when considered in connection with the accompanying drawings.

FIG. 1 illustrates a plan view of a light emitting module according to a first embodiment of the present disclosure.
FIG. 2 illustrates an enlarged plan view of a region II in FIG. 1.
FIG. 3 illustrates a perspective view of the light emitting module according to the first embodiment.
FIG. 4 illustrates a plan view of a test light emitting module according to the first embodiment.
FIG. 5 is a block diagram showing a preliminary testing system for determining the relationship between values of electric power to obtain lighting patterns using the test light emitting module and temperature distributions of the plurality of light emitting elements resulting from the lighting patterns.
FIG. 6 is a graph showing the relationship between values of the first electric power and average values of measured temperature values, in which a horizontal axis represents the values of the first electric power and a vertical axis represents the average values of measured temperature values.
FIG. 7 is a graph showing the relationship between the average value and a difference of measured temperature values, in which a horizontal axis represents the average value of measured temperatures and a vertical axis represents a difference between maximum and minimum values of the measured temperature values.
FIG. 8 is a block diagram of a temperature estimation system according to the first embodiment.
FIG. 9 is a flowchart of a temperature estimation method for a light emitting module according to the first embodiment.
FIG. 10A is a chart to explain an example of signals to obtain a lighting pattern.
FIG. 10B is a chart to explain another example of signals to obtain another lighting pattern.
FIG. 11 is a graph showing an example of a function f(d), in which a horizontal axis represents a position of a light emitting element and a vertical axis represents an amount of heat h.
FIG. 12A is a chart showing an example of a lighting pattern.
FIG. 12B is a chart showing an example of data representing an amount of heat a light emitting element applies to itself and its surroundings.
FIG. 12C is a chart showing an example of data representing an amount of heat another light emitting element applies to itself and its surroundings.
FIG. 12D is a chart showing a sum of the amount of heat applied by a light emitting element and another light emitting element to themselves and their surroundings.
FIG. 13 is a chart showing an example of a kernel used in obtaining convolution integrals of functions f(d).
FIG. 14 is a chart showing variables corresponding to the plurality of light emitting elements.
FIG. 15 is a chart showing examples of estimated temperature values of the plurality of light emitting elements.
FIG. 16 is a graph showing the accuracy of estimated temperature values, in which a horizontal axis represents a lighting pattern and a horizontal value represents a difference between an estimated temperature value and a measured temperature value.
FIG. 17 is a block diagram showing an automotive unit according to a second embodiment.

DETAILED DESCRIPTION

First Embodiment

A fist embodiment of the present disclosure is a temperature estimation method for estimating the temperature of a light emitting module including a plurality of light emitting elements. The light emitting module is, for example, a light source used in a headlight of a vehicle. This embodiment is an example of estimating the temperature of each light emitting element when a new lighting pattern is employed for the light emitting module, which is performed as a preliminary test to verify whether or not any of the light emitting elements exceeds the upper limit.

Light Emitting Module

A light emitting module according to a first embodiment which is the subject for evaluation will be explained first.

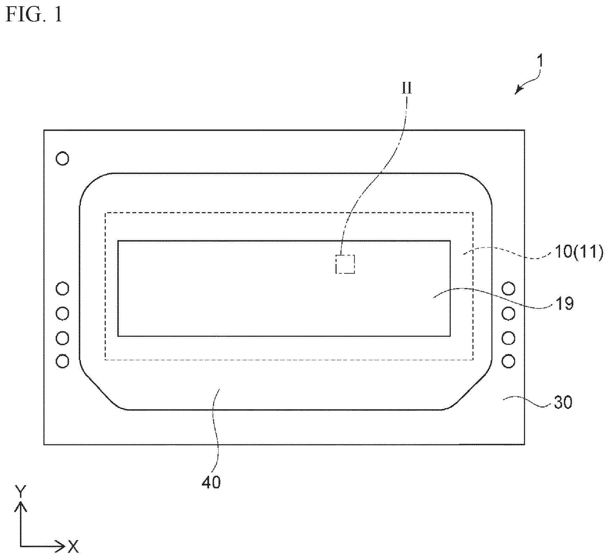

FIG. 1 illustrates a plan view of a light emitting module according to the first embodiment.

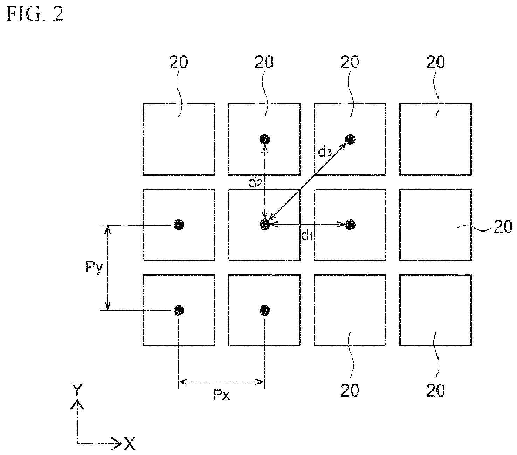

FIG. 2 illustrates an enlarged plan view of a region II in FIG. 1.

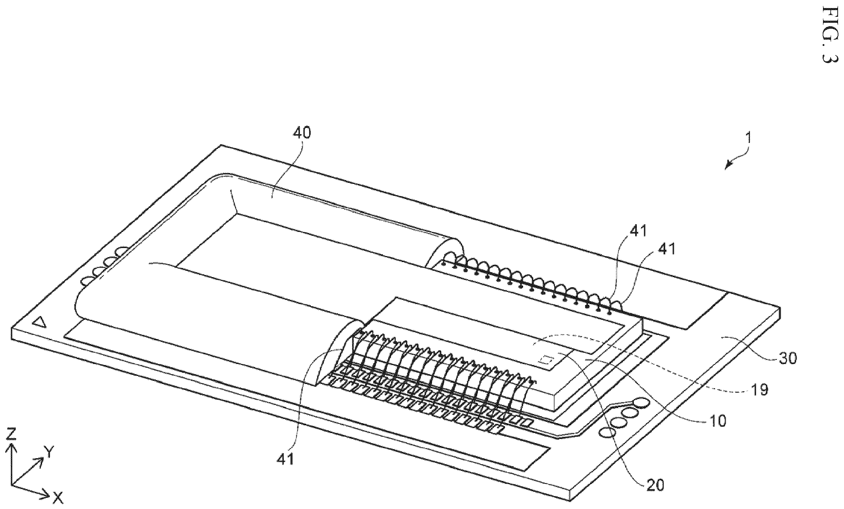

FIG. 3 illustrates a perspective view of the light emitting module according to the first embodiment.

As shown in FIG. 1 to FIG. 3, a light emitting module 1 is provided with a module board 30. A wiring board 10 is disposed on an upper surface of the module board 30. For example, the wiring board 10 is a board having wires on the inside and on the surface of an insulating base material, e.g., an ASIC (application specific integrated circuit) board. A plurality of light emitting elements 20 is arranged on the wiring board 10. The wiring board 10 has a controller 11 that respectively controls the light emitting elements thereby achieving a predetermined lighting pattern. The controller 11 may be a member that is separate from the light emitting module 1, in which case the controller 11 is disposed external to the light emitting module 1.

A portion of the upper surface of the wiring board 10 is defined as an emission region 19. In a plan view, the emission region 19 has, for example, a rectangular shape. The light emitting elements 20 are arranged in the emission region 19, for example, in a matrix. The number of light emitting elements 20 is, for example 100 to 2,000,000, preferably 1,000 to 500,000, more preferably, 3,000 to 200,000. In one example, the light emitting elements 20 are arranged in a matrix of 256 pieces per row along the longer side and 64 pieces per column along the shorter side of the emission region 19. In this case, 16,384 pieces of light emitting elements 20 are arranged in the light emitting module 1.

On the module board 30 and on the wiring board 10, a frame shaped resin 40 is disposed to surround the emission region 19. Wires 41 for connecting terminals of the module board 30 to terminals of the wiring board 10 may be disposed in the resin 40. In FIG. 3, the wires 41 disposed in the resin 40 are shown by omitting a portion of the resin 40. In the emission region 19, moreover, a wavelength conversion member may be disposed over the light emitting elements 20. The wavelength conversion member, for example, is plate or sheet shaped, and contains a wavelength conversion substance, for example. In the case in which a wavelength conversion member or the like is disposed over the light emitting elements 20, FIG. 2 illustrates a view seen through the wavelength conversion member or the like.

As shown in FIG. 2, in the plan view, each light emitting element 20 has a quadrangular shape. The light emitting elements 20 are, for example, light emitting diodes (LEDs). In the plan view, it is assumed that an arrangement distance of two adjacent light emitting elements 20 in a direction along the longer side of the emission region 19 (hereinafter referred to as "X direction") is Px, and an arrangement distance of two adjacent light emitting elements 20 in a direction along the shorter side of the emission region 19 (hereinafter referred to as "Y direction") is Py. In this case, distance $d_1$ between centers of two adjacent light emitting elements 20 in the X direction is Px, distance $d_2$ between centers of two adjacent light emitting elements 20 in the Y direction is Py, and the distance $d_3$ between the centers of two adjacent light emitting elements in a diagonal direction is $d_3 = \sqrt{(Px^2 + Py^2)}$.

In more general, the distance $d_{ab}$ between the center of a light emitting element 20 and a center of another light emitting element 20 which is the $a^{th}$ element in the X direction and the $b^{th}$ element in the Y direction is $d_{ab} = \sqrt{\{(a \times Px)^2 + (b \times Py)^2\}}$. In the case in which each light emitting element 20 has a quadrangular shape in a plan view, the center of each light emitting element 20 is an intersection of the two diagonal lines of the light emitting element 20. In one example, the arrangement distances Px and Py are 10 $\mu$m to 120 $\mu$m each, preferably 15 $\mu$m to 70 $\mu$m each.

In the light emitting module 1, the controller 11 controls the emission of the light emitting elements 20 based on external signals. For example, the controller 11 performs time division 256 gradation control on the light emitting elements 20. The controller 11 can control the light emitting elements 20 individually or per group. By allowing the controller 11 to individually control the gradation of the light emitted by each light emitting element 20 in this manner, various lighting patterns can be achieved by the light emitting elements 20 as a whole. Furthermore, the controller 11 may control the emission of each light emitting element 20 by controlling the magnitude of an electric current supplied to each light emitting element 20.

Determining Relationship Between Electric Power and Temperature Distribution of Light Emitting Elements

The temperature distribution of the plurality of light emitting elements 20 of the light emitting module 1 in the case of emitting light of a certain lighting pattern is estimated. In the present disclosure, a "lighting pattern" refers to a bright/dark pattern of light emitted by the light emitting elements 20 of the light emitting module 1 by controlling the emission of each light emitting element 20. In the description below, an example of obtaining a lighting pattern by controlling the gradation of light emitted by each light emitting element 20 will be described.

First, a test light emitting module is prepared.

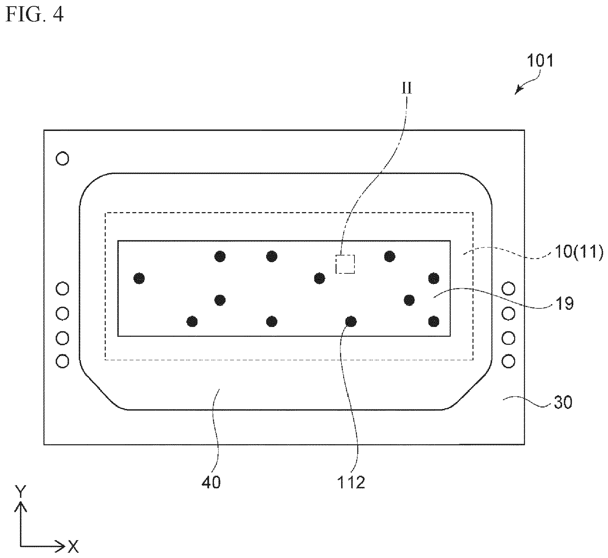

FIG. 4 illustrates a plan view of a test light emitting module according to the first embodiment.

As shown in FIG. 4, the test light emitting module 101 is provided with multiple temperature sensors 112 in addition to the components of the light emitting module 1 described above. The temperature sensors 112 are provided in the wiring board 10. The number of temperature sensors 112 is fewer than that of the light emitting elements 20, for example, two or more, preferably 10 to about several tens. Each temperature sensor 112 is disposed at a position corresponding to one light emitting element 20. In other words, each temperature sensor 112 measures the temperature of the corresponding light emitting element 20.

Then, the test light emitting module 101 is operated using multiple lighting patterns in order to obtain electric power (hereinafter referred to as "first electric power P1") supplied to the test light emitting module 101 to obtain each light pattern as well as the representative value and the value representing the variation of the temperature values measured by the temperature sensors 112 for each lighting pattern.

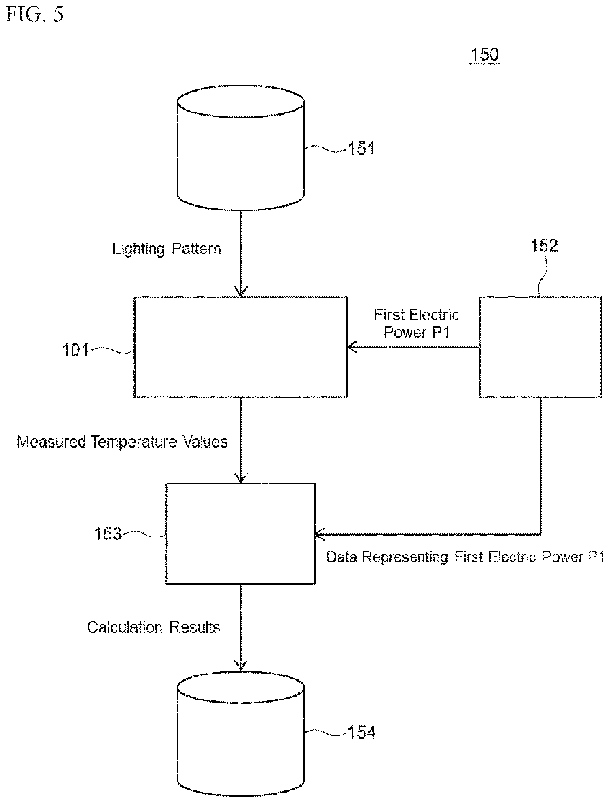

FIG. 5 is a block diagram showing a preliminary testing system for determining the relationship between values of the first electric power P1 and the temperature distributions of the light emitting elements by using the test light emitting module 101.

Hereinbelow, as an indicator for the "temperature distribution of the light emitting elements," a representative value and a value representing the variation of the temperature values measured by the temperature sensors 112 are used. The "representative value of the measured temperature values" refers to a numerical value that represents temperature measurement results, and in the first embodiment, an average value of measured temperature values is used. However, the representative value is not limited to this, and a mode, median, or the like, may be used. The "value representing the variation of the measured temperature values" refers to a numerical value that represents the breadth of distribution of the measured temperature values, and in the first embodiment, a difference between maximum and minimum values of measured temperature values, i.e., the value obtained by subtracting the minimum value from the maximum value, is used. However, the value representing the variation of the measured temperatures is not limited to this, and the standard deviation or the like may be used instead.

As shown in FIG. 5, the preliminary testing system 150 includes the test light emitting module 101, a storage151 in which data of multiple lighting patterns are stored, a power supply circuit 152 that supplies electric power to the test light emitting module 101, a processor 153 for performing calculations based on the outputs of the temperature sensors 112 of the test light emitting module 101 and the outputs of the power supply circuit 152, and a storage 154 for storing the calculation results of the processor 153. The storage 151 and 154 can be configured with, for example, an SSD (solid state drive), HDD (hard disk drive) or the like. The processor 153 can be configured with, for example, a general-purpose computer.

In the preliminary testing system 150, data of one of the lighting patterns stored in the storage 151 is input to the test light emitting module 101, and the power supply circuit 152 supplies the first electric power P1 necessary to obtain light of the one of the lighting patterns to the test light emitting module 101. This allows the test light emitting module 101 to achieve the light of the one of the lighting patterns.

At this time, the temperature sensors 112 of the test light emitting module 101 measure the temperatures, and outputs the measurement results to the processor 153. Since there are two or more temperature sensors 112, there are two or more temperature measurement results. The power supply circuit 152 outputs data representing the value of the first electric power P1 supplied to the test light emitting moule 101, to the processor 153.

The processor 153 calculates the average value Sen_a of the measured values as the representative value of those measured by the temperature sensors 112. It also calculates the difference Sen_r between the maximum and minimum measured values as the value representing the variation of those measured by the temperature sensors 112. The processor 153 further determines the relationship between the value of the first electric power P1 and the average value Sen_a of the measured values and the relationship between the average value Sen_a and the difference Sen_r of the measured values.

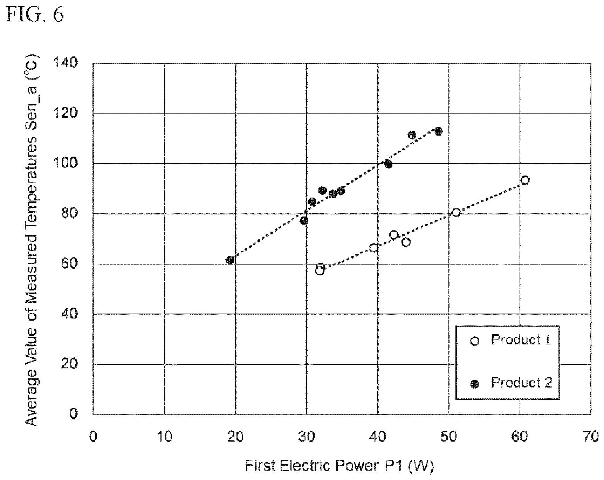

FIG. 6 is a graph showing the relationship between the values of the first electric power and average values of measured temperatures in which a horizontal axis represents the values of the first electric power and a vertical axis represents the average values of the measured temperatures.

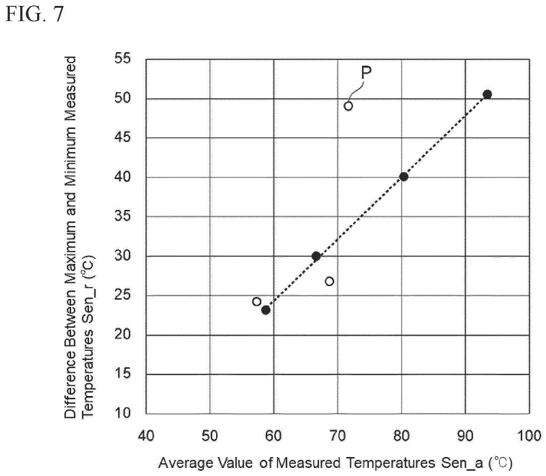

FIG. 7 is a graph showing the relationship between an average value of and a difference in measured temperature values in which a horizontal axis represents the average value of measured temperatures and a vertical axis represents a difference between the maximum and minimum values of the measured temperature values.

In FIG. 6 and FIG. 7, each plot shows a result obtained when the test light emitting module 101 corresponding to each product was operated to achieve one of the plurality of lighting patterns.

As shown in FIG. 6, the relationship between the values of the first electric power P1 and the average values Sen_a of the measured temperature values is approximately represented as a linear function. When the value of the first electric power P1 is 0, the average value Sen_a is a temperature that is approximately room temperature (i.e., approximately 20°C).

As shown in FIG. 7, the relationship between the average values Sen_a and the differences Sen_r of the measured temperature values is also approximately represented as a linear function. When the average value Sen_a is approximately room temperature, the difference Sen_r is 0.

Assuming that a, b, c, and d are coefficients, the value of the first electric power P1, an average value Sen_a of measured temperature values, and a difference Sen_r between the maximum and the minimum values of measured temperature values can be expressed by the formulas (1) and (2) below. The processor 153 stores the formulas (1) and (2) in the storage 154.

$$\text{Sen\_a} = a \times P1 + b \qquad (1)$$

$$\text{Sen\_r} = c \times \text{Sen\_a} + d \qquad (2)$$

In FIG. 7, with respect to the plot P where the Sen_a is approximately 72°C and the Sen_r is approximately 49°C, the value of the difference Sen_r is deviated from the linear function shown by the broken line by about +17°C in the vertical axis direction. An approximate formula can be obtained by including or excluding such a plot P which is considerably deviated from the linear function.

In the present embodiment, as shown in FIG. 6 and FIG. 7, the Sen_a and Sen_r linear functions are obtained from operation of the test light emitting module 101 with multiple lighting patterns (e.g., three or more lighting patterns). In the present disclosure, such a linear function may be obtained, for example, from two lighting patterns. Specifically, in the case of using the light emitting module 1 as a headlight of a vehicle, each of the Sen_a and Sen_r linear functions can be obtained by using, for example, a first lighting pattern corresponding to a high beam and a second light pattern corresponding to a low beam. This can simplify the process of determining the relationship between the values of the first electric power and the temperature distributions of the light emitting elements using the test light emitting module. In order to improve the accuracy of the evaluation results, three or more lighting patterns, preferably five or more lighting patterns, more preferably ten or more lighting patterns may be used to obtain the approximate formulas.

Estimating Temperatures of Light Emitting Elements Based on Lighting Pattern and Electric Power

A method for estimating the temperature of each of light emitting elements lit with a specific lighting pattern based on the preliminary test results described above will be explained next.

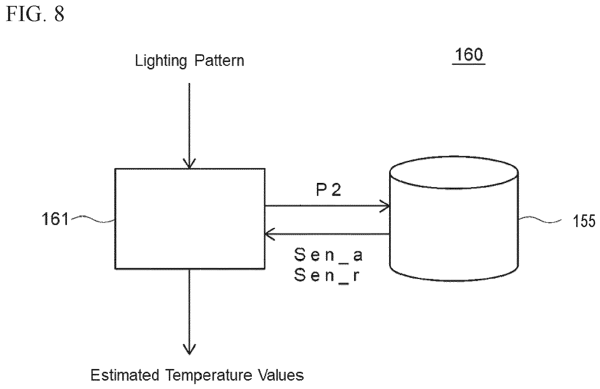

FIG. 8 is a block diagram of a temperature estimation system according to the first embodiment.

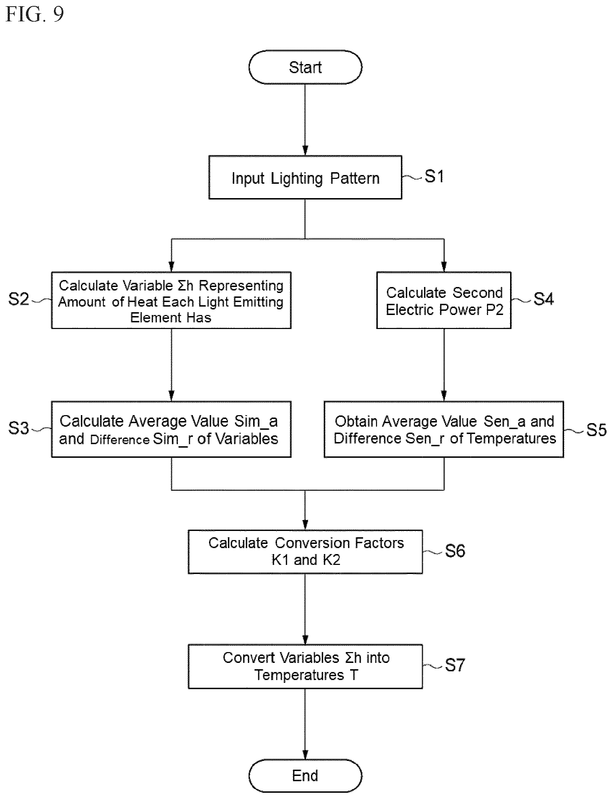

FIG. 9 is a flowchart of a temperature estimation method according to the first embodiment.

As shown in FIG. 8, the temperature estimation system 160 according to the present embodiment is provided with a processor 161 and a storage 155. The calculation means 161 can be constituted by, for example, a general-purpose computer. The storage 155 can be the same as the storage 154 of the preliminary testing system 150 described above or one that stores a copy of the information stored in the storage 154 of the preliminary testing system 150.

First, as shown in the block diagram in FIG. 8 and Step S1 in FIG. 9, data of a lighting pattern is input to the processor 161. This lighting pattern is, for example, a new lighting pattern.

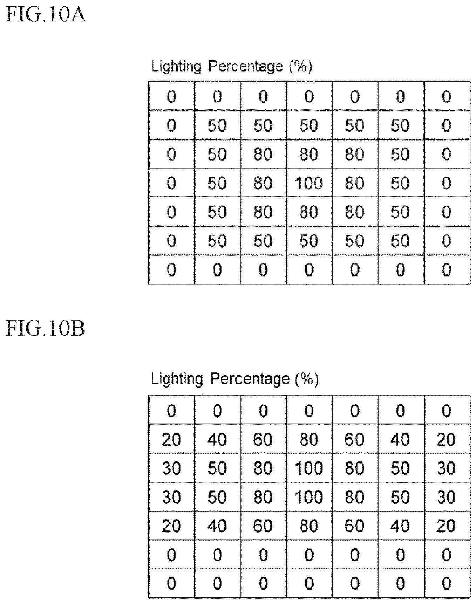

FIG. 10A and FIG. 10B are charts to explain examples of lighting pattern signals to obtain different lighting patterns.

In each of FIG. 10A and FIG. 10B, one lighting pattern is shown using a $7 \times 7$ matrix for simplification purposes. In practice, however, a numerical value is preferably provided per light emitting element 20. Accordingly, for example, a lighting pattern is expressed by using a $64 \times 256$ matrix.

In each of the examples shown in FIG. 10A and FIG. 10B, values of the signals to obtain a lighting pattern are represented as an arrangement of numerical values each representing a lighting percentage (%) of a light emitting element 20, which is an example of an intensity of light emitted by the light emitting element 20. In the case of performing time division control, the "lighting percentage" of a light emitting element 20 is, for example, the percentage of the time during which the light emitting element 20 is lit in one lighting period. In the case of performing current control, the "lighting percentage" for a light emitting element 20 is, for example, the percentage of a value of a current supplied to the light emitting element 20 relative to the maximum current value. In FIG. 10A and FIG. 10B, "100 (%)" represents lighting at the brightest gradation, and "0 (%)" represents not being lit. For example, in the case of performing time division 256 gradation (from 0 to 255) control on the light emitting elements 20, 255 is expressed as "100 (%)" and 0 is expressed as "0 (%)."

The lighting pattern shown in FIG. 10A is a pattern to cause the area near the center of the emission region 19 to produce high intensity light, and the lighting pattern in FIG. 10B is a pattern to cause the upper portion of the emission region 19 to produce high intensity light. However, lighting patterns are not limited to these examples.

Next, as shown in the block diagram in FIG. 8 and Step S2 in FIG. 9, the processor 161 calculates, based on a lighting pattern, a variable Σh corresponding to the sum of amount of heat each light emitting element 20 has. Step S2 will be described in detail below.

In the description below, a light emitting element which is the subject for variable Σh computation will be referred to as a "light emitting element 20a" and each peripheral light emitting element that conducts heat to the light emitting element 20a will be referred to as a "light emitting element 20b." When a light emitting element 20b is lit, the light emitting element 20b generates heat. The light emitting element 20b heats up itself, and also the heat generated by the light emitting element 20b is conducted to its surroundings to thereby heat the light emitting elements 20 that surround it. Thus, the temperature of the light emitting element 20a is affected by not only its lighting condition, but also by the lighting conditions of light emitting elements 20b located around it. Accordingly, in estimating the temperature of the light emitting element 20a, it is preferable to obtain the sum of the amount of heat the light emitting element 20a receives from itself and light emitting elements 20b located around it. The lighting conditions of light emitting elements 20a and 20b depend on the lighting pattern.

Specifically, a function f(d) representing the amount of heat the light emitting element 20a receives from the light emitting element 20a itself and a light emitting element 20b is established. In a general description, the function f(d) is a function of a distance from a heat source and the amount of heat received from the heat source. To describe in more detail, the function f(d) represents the relationship between the data representing the amount of heat a light emitting element 20a receives from the light emitting element 20a or a light emitting element 20b and the data representing the distance between the light emitting element 20a and the light emitting element 20a or the light emitting element 20b.

For example, assuming that the amount of heat a light emitting element 20a receives from the light emitting element 20a itself or another light emitting element 20b is h, the amount of heat the light emitting element 20a receives from the light emitting element 20a itself or the amount of heat the light emitting element 20b receives from the light emitting element 20b itself is $h_0$, the attenuation rate is r, and the distance between the center of the light emitting element 20a and the center of the light emitting element 20a or the light emitting element 20b is d, the function f(d) described above can be expressed by a formula (3) below, for example. The attenuation rate r is a value higher than 0, but lower than 1. The amount of heat described here means the data representing the amount of heat.

$$h = f(d) = h_0 \times r^d \quad (3)$$

When a light emitting element 20a itself emits light, the amount of heat h the light emitting element 20a receives is $h = h_0 \times r^0 = h_0 \times 1 = h_0$ as the distance d is 0. In other words, the amount of heat the light emitting element 20a receives from itself is $h_0$.

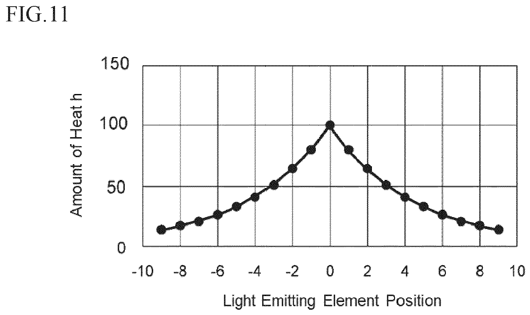

FIG. 11 is a graph showing an example of the function f(d), where a horizontal axis represents a position of a light emitting element, and a vertical axis represents the amount of heat h.

The positions shown on the horizontal axis in FIG. 11 are the positions in the X or Y direction using the position of a light emitting element 20b that is lit as a reference. As for the plots shown in FIG. 11, the absolute value for each position along the horizontal axis in FIG. 11 corresponds to the distance d described above. In FIG. 11, the amount of heat $h_0$ is assumed to be 100, the attenuation rate r is assumed to be 0.8, and each of the arrangement distances Px and Py is assumed to be 1. In this case, the distance between the centers of two adjacent light emitting elements 20 in the X or Y direction is 1. The attenuation rate r can be calculated based on the actual measurements of the temperatures of several light emitting elements 20 in the light emitting module 1. In this case, the formula (3) described above would be h = $100 \times 0.8^d$. As shown in FIG. 11, the greater the distance d, the smaller the amount of heat h becomes.

Next, based on the lighting pattern, convolution integrals of the functions f(d) are obtained. In this manner, a variable Σh that is the sum of the amount of heat h received from the light emitting elements 20 is computed with respect to each light emitting element 20.

The convolution of the functions f(d) will be explained below. In the description below, for simplification purposes, a case will be explained in which only two light emitting elements 20a and 20b are lit, and the other light emitting elements 20 are not. The attenuation rate r used is 0.8, and each of the arrangement distances Px and Py is 1.

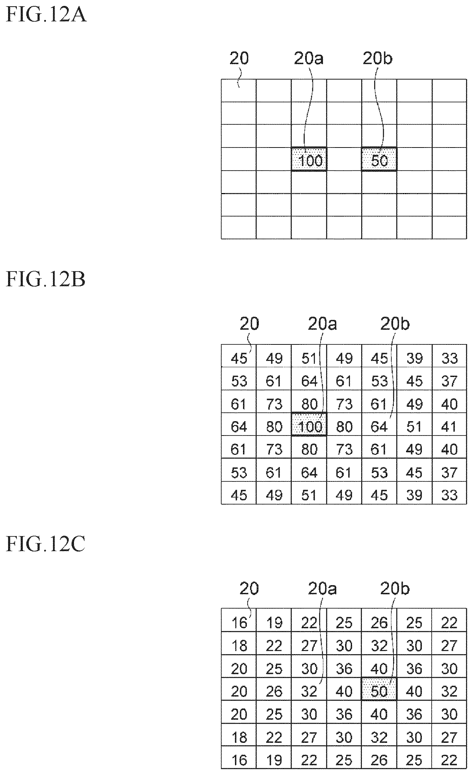

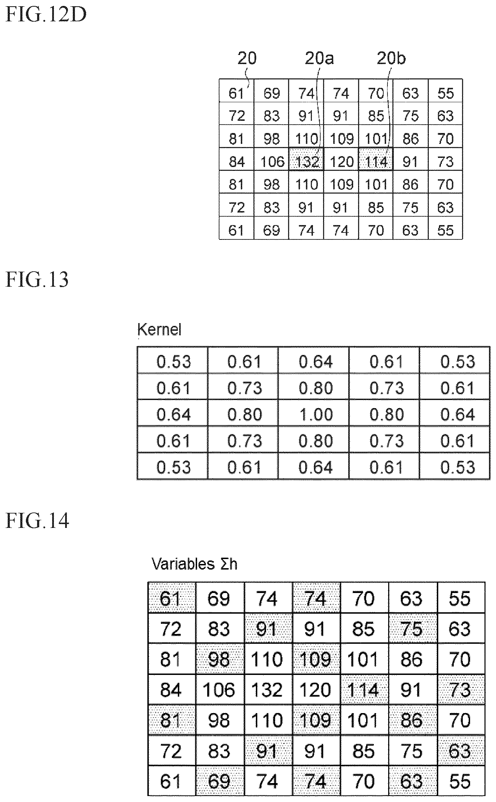

FIG. 12A is a chart showing an example of a lighting pattern. FIG. 12B is a chart showing an example of data representing the amount of heat the light emitting element 20a conducts to itself and its surroundings. FIG. 12C is a chart showing an example of data representing the amount of heat the light emitting element 20b conducts to itself and its surroundings. FIG. 12D is a chart showing an example of data representing a sum of the amount of heat the light emitting elements 20a and 20b conduct to themselves and their surroundings. For simplification purposes, the "data representing the amount of heat" may be simply referred to as "amount of heat" in the description below.

As shown in FIG. 12A, the lighting percentage of the light emitting element 20a is assumed to be 100%, the lighting percentage of the light emitting element 20b is assumed to be 50%, and the lighting percentage of any other light emitting elements 20 is assumed to be 0%. "0%" is not shown in the chart in FIG. 12A.

FIG. 12B shows only the amount of heat the light emitting element 20a conducts to itself and its surroundings, i.e., the amount of heat generated by the light emitting element 20b is not reflected. In this case, based on the formula (3) described above, the amount of heat the light emitting element 20a has is 100, and the amount of heat the other light emitting elements 20 have become smaller as the distance from the light emitting element 20a increases. The amount of heat conducted to a light emitting element 20 adjacent to the light emitting element 20a in the X or Y direction is $100 \times 0.8^1 = 80$ according to the formula (3). The amount of heat conducted to the light emitting element 20b which is located at the second cell in the X direction is $100 \times 0.8^2 = 64$ according to the formula (3). As for any of the light emitting elements 20 adjacent to the light emitting element 20a in a diagonal direction, because the distance d from the light emitting element 20a is d = $\sqrt{(1^2 + 1^2)}$ = $\sqrt{2}$, the amount of heat h received by such a light emitting element 20 would be h = 100 × $0.8^{\sqrt{2}}$ ≒ 73.

FIG. 12C shows only the amount of heat the light emitting element 20b conducts to itself and its surroundings, i.e., the amount of heat generated by the light emitting element 20a are not reflected. In this case, based on the formula (3), the amount of heat the light emitting element 20b has is 50, and the amount of heat the other light emitting elements 20 have become smaller as the distance from the light emitting element 20b increases. The amount of heat conducted to the light emitting element 20a is 50 × $0.8^2$ = 32 according to the formula (3).

The matrix shown in FIG. 12D is obtained by adding the numerical values in FIG. 12B and the numerical values in FIG. 12C, respectively. In the manner described above, a variable Σh that is equivalent to the total amount of heat h conducted to each light emitting element 20 is calculated. For example, the variable Σh equivalent to the total amount of heat conducted to the light emitting element 20a is 100 + 32 = 132, and the variable Σh equivalent to the total amount of heat conducted to the light emitting element 20b is 50 + 64 = 114.

The convolution of the functions f(d) may be performed with respect to all light emitting elements 20 in the light emitting module 1, or only those that surround a target light emitting element 20 that is the subject for the variable Σh calculation. Performing convolution on only those light emitting elements 20 that surround a target light emitting element can reduce the computational intensity. For example, computation can be performed only on the light emitting elements 20 up to the 10th from the target light emitting element 20 in both the X and Y directions. In this case, convolution is performed for the 21 × 21 range around the target light emitting element 20.

Convolution of the functions f(d) may be performed by running the formula (3) described above each time. Alternatively, the convolution may be performed through a filtering process using a kernel. In this case, a kernel is prepared beforehand by calculating kernel coefficients using the formula (3) described above. By aligning the central cell of the kernel with the cell in the matrix for a lighting pattern such as that shown in FIG. 12A that corresponds to the target light emitting element 20 which is the subject for the variable Σh calculation, the product of the amount of heat and the kernel coefficient is obtained for each cell overlapping the kernel. The sum of all products is the variable Σh of the subject light emitting element 20.

FIG. 13 is a diagram showing an example of the kernel used for convolution of the functions f(d).

The numerical value shown in each cell in FIG. 13 is a kernel coefficient. In the example shown in FIG. 13, the amount of heat $h_0$ is assumed to be 1, the attenuation rate r is assumed to be 0.8, and each of the arrangement distances Px and Py is assumed to be 1. Furthermore, the kernel size is a 5 × 5 matrix. The kernel size, as described above, may be a 21 × 21 matrix or otherwise. The larger the kernel size, the higher the accuracy becomes. However, the computational intensity also increases as the kernel size increases.

Step S2 in FIG. 9 completes when the variable Σh is obtained for each of the light emitting elements 20 in the manner described above.

Next, as shown in the block diagram in FIG. 8 and Step S3 in FIG. 9, the representative value and the value representing the variation of the variables Σh of two or more light emitting elements 20 of the light emitting module 1 are calculated. In the present embodiment, the light emitting elements 20 used to calculate the representative value and the value representing the variation of the variables Σh are the same as the two or more light emitting elements of the test light emitting module 101 used to obtain the representative value and the value representing the variation of the temperatures.

In other words, as described earlier, the light emitting module 1 is provided with light emitting elements 20, but not provided with temperature sensors. The test light emitting module 101 is provided with light emitting elements 20 and temperature sensors 112, but the number of the temperature sensors 112 is fewer than that of the light emitting elements 20. For this reason, some of the light emitting elements 20 correspond to the temperature sensors 112, but the remaining light emitting elements 20 do not correspond to temperature sensors 112. The representative value and the value representing the variation of the variables Σh are calculated by using the light emitting elements 20 of the light emitting module 1 corresponding to the light emitting elements 20 of the test light emitting module 101 to which the temperature sensors 112 correspond, respectively. In the present embodiment, moreover, the average value Sim_a of the variables Σh is used as the representative value of the variables Σh, and the difference Sim_r between the maximum and minimum values of the variables Σh is used as the value representing the variation of the variables Σh.

FIG. 14 is a chart showing multiple variables Σh corresponding to multiple light emitting elements.

In FIG. 14, the variables Σh of the light emitting elements 20 of the light emitting module 1 at the same positions as the light emitting elements 20 corresponding to the temperature sensors 112 in the test light emitting module 101 are marked with hatching. In other words, the average value Sim_a of the variables Σh and the difference Sim_r between the maximum and minimum values of the variables Σh are calculated by using only the variables Σh marked with hatching.

Meanwhile, as shown in Step S4 in FIG. 9, the processor 161 calculates electric power (hereinafter referred to as "second electric power P2") needed to obtain the lighting pattern. The second electric power P2 is the electric power that needs to be supplied to the light emitting module 1 when the light emitting module 1 is assumed to actually achieve the lighting pattern. To obtain the value of the second electric power P2, for example, an actually measured value of the light emitting module may be used, or an estimated value based on the sum of the gradation values of all light emitting elements 20 of the light emitting module 1 may be used.

Next, as shown in the block diagram in FIG. 8 and Step S5 in FIG. 9, the processor 161 calculates the average temperature value Sen_a and the difference Sen_r between the maximum and minimum values of the temperature values corresponding to the second electric power P2 by referencing the formulas (1) and (2) described above that are stored in the storage 154.

Then, as shown in the block diagram in FIG. 8 and Step S6 in FIG. 9, the processor 161 calculates conversion factors K1 and K2. The conversion factors K1 and K2 are factors used to convert the average value Sim_a of the variables Σh and the difference Sim_r between the maximum and minimum values of the variables Σh into the average value Sen_a and the difference Sen_r between the maximum and minimum values of temperatures. The conversion factors K1 and K2 are defined by the formulas (4) and (5) below.

$$K1 = Sen\_r / Sim\_r \quad (4)$$

$$K2 = Sen\_a - Sim\_a \times K1 \quad (5)$$

The conversion factor K1 is a ratio of the difference Sen_r between the maximum and minimum values acquired by referencing the formulas (1) and (2) to the difference Sim_r between the maximum and minimum values of the variables Σh. The conversion factor K1 enables conversion of the difference Sim_r between the maximum and minimum values of the variables Σh to the difference Sen_r between the maximum and minimum temperature values.

The conversion factor K2 is the difference between the average value Sen_a of the temperatures and the average value (Sim_a × K1) of the variables Σh converted by the conversion factor K1. The conversion factor K2 enables conversion of the average value (Sim_a × K1) of the variables Σh converted by the conversion factor K1 to the average value Sen_a of the temperatures.

Next, as shown in the block diagram in FIG. 8 and Step S7 in FIG. 9, the conversion factors K1 and K2 are used in converting the variables Σh into the temperatures of all light emitting elements 20 of the light emitting module 1. Specifically, when an estimated temperature value for a light emitting element 20 is T, the estimated temperature value T is calculated by using the formula (6) below.

$$T = K1 \times \Sigma h + K2 \quad (6)$$

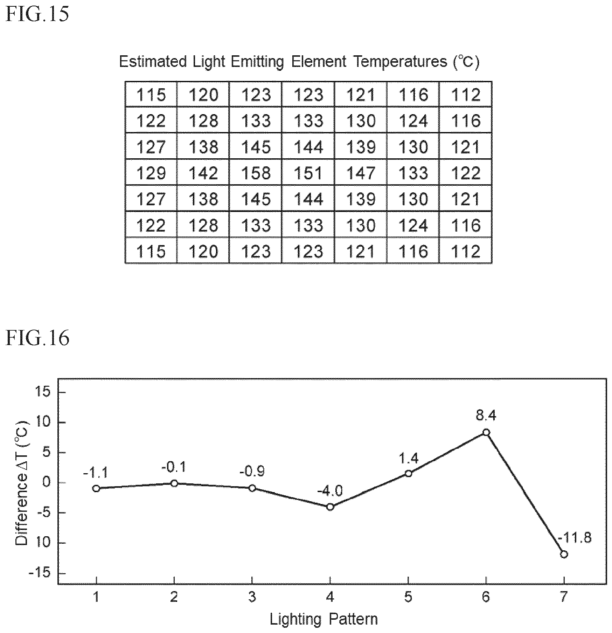

FIG. 15 is a chart showing examples of estimated temperature values of the light emitting elements.

As shown in FIG. 15, the temperatures of all light emitting elements 20 included in the light emitting module 1 are estimated. By using the method shown in FIG. 9, the temperatures of all light emitting elements 20 are estimated based on the predetermined relationship among the values of the first electric power P1 supplied to the light emitting module 1, the representative values and the values representing the variation of the temperatures of two or more light emitting elements 20, and the second electric power P2 to be supplied to the light emitting module 1 for achieving the lighting pattern.

FIG. 16 is a graph showing the accuracy of the estimated values where a horizontal axis represents a lighting pattern and a vertical axis represents the difference between the estimated and measured values.

As for the evaluation method, the estimated temperature of each light emitting element 20 of the light emitting module 1 for seven lighting patterns was obtained first. Then, the temperatures of the light emitting elements 20 were actually measured by the temperature sensors 112 by allowing the test light emitting module 101 shown in FIG. 4 to achieve the same seven lighting patterns. Then, the difference ΔT between an estimated value T and a measured value Tj was calculated by using the formula (7) below.

$$\Delta T = T - Tj \quad (7)$$

As shown in FIG. 16, all ΔT fell within the -11.8°C to +8.4°C range. The plot P shown in FIG. 7 where the Sen_a is approximately 72°C and the Sen_r is approximately 49°C is deviated from the linear function indicated by the broken line by about +17°C in the vertical direction, but the final error ΔT was about 10°C at most. This demonstrated that the temperature estimation method according to the first embodiment was highly reliable.

The advantage of the first embodiment will be explained next.

According to the first embodiment, the temperatures of the light emitting elements 20 can be estimated by using the predetermined relationship between the values of the first electric power P1 and the temperatures of the light emitting elements 20, i.e., the relationship expressed by the formulas (1) and (2) described earlier, and the second electric power P2 to be supplied to the light emitting module. This allows for a preliminary check when a new lighting pattern is introduced as to whether or not the temperature of any of the light emitting elements resulting from the new lighting pattern exceeds the upper limit. In other words, before introducing a new lighting pattern, the lighting pattern can be evaluated from the standpoint of the light emitting element temperatures. This, as a result, eliminates the necessity of operating the light emitting module 1 with the new lighting pattern for evaluation each time the new lighting pattern is introduced, thereby increasing the efficiency in preparing lighting patterns. Because it is unnecessary to actually operate the light emitting module 1 for evaluation, a faulty lighting pattern can never destroy the light emitting module 1.

According to the first embodiment, moreover, the relationship among the values of the first electric power P1, the average values Sen_a and the differences Sen_r between the maximum and the minimum values of the temperatures of the light emitting elements is obtained by using the test light emitting module 101. Thus, the relationship expressed by the formulas (1) and (2) can be determined accurately.

According to the first embodiment, furthermore, the number of temperature sensors 112 in the test light emitting module 101 is fewer than the number of light emitting elements 20. This can reduce the calculation load in determining the relationship expressed by the formulas (1) and (2). Similarly, the number of light emitting elements 20 used in obtaining the average value Sim_a and the difference Sim_r of the variables $\Sigma h$ in Step S3 in FIG. 9 is fewer than the total number of light emitting elements 20 in the light emitting module 1. This can also reduce the calculation load in obtaining the average value Sim_a and the difference Sim_r of the variables $\Sigma h$. In addition, the light emitting elements 20 used in obtaining the average value Sim_a and the difference Sim_r of the variables $\Sigma h$ correspond to the light emitting elements 20 in the test light emitting module 101 provided with the temperature sensors 112. This can match the average value Sim_a and the difference Sim_r of the variables $\Sigma h$ to the average value Sen_a and the difference Sen_r of the temperatures, respectively, thereby improving the accuracy of the estimated values T.

According to the first embodiment, furthermore, there is no need to dispose temperature sensors in the light emitting module 1 itself. This simplifies the structure of the light emitting module 1, improving the reliability while reducing the cost.

Second Embodiment

A second embodiment is an example of estimating the temperatures of light emitting elements of a light emitting module installed in an automotive unit in which the light emitting moule is allowed to achieve lighting patterns as they are successively generated during the operation of the automotive unit.

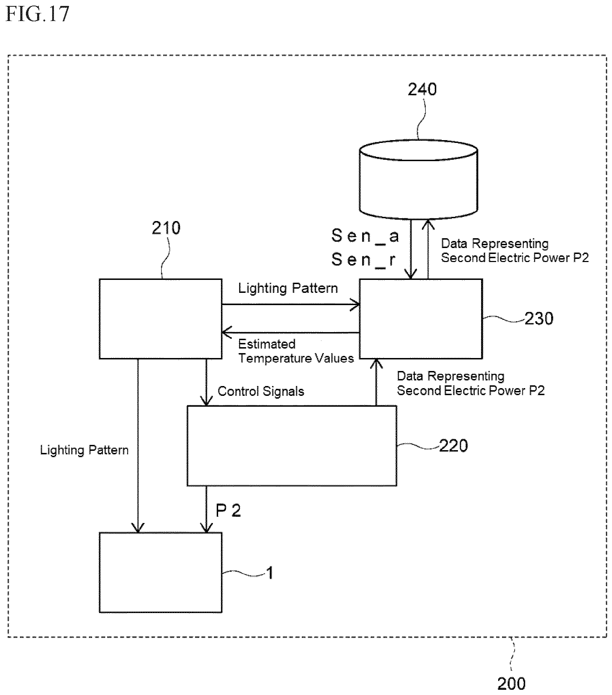

FIG. 17 is a block diagram of an automotive unit according to the second embodiment.

As shown in FIG. 17, an automotive unit 200 according to the second embodiment includes an electronic control unit (ECU) 210, a light emitting module 1, a power supply unit 220, a processor 230, and a storage 240.

The ECU 210 controls the entire automotive unit 200. The ECU 210 also controls the light emitting module 1 by outputting signals for a lighting pattern to the light emitting module 1. The light emitting module 1 is a light source of a headlight of the automotive unit 200. The components of the light emitting module 1 are as described with reference to the first embodiment. The power supply unit 220 is controlled by the ECU 210 to supply second electric power P2 to the light emitting module 1 and output data representing the measured value of the second electric power P2 to the processor 230.

The ECU 210 also outputs signals to obtain a lighting pattern to the processor 230. The processor 230 estimates the temperature of each light emitting element 20 of the light emitting module 1 based on the lighting pattern and the second electric power P2. The processor 230 may include, for example, a CPU (central processing unit). The storage 240 is constituted with, for example, an SSD. The storage 240 stores the relationship expressed by the formulas (1) and (2) described earlier. The processor 230 and the storage 240 may be included in the ECU 210.

In the automotive unit 200, during the operation of the automotive unit 200, the ECU 210 generates signals representing a lighting pattern based on the ambient condition and the operating conditions of the automotive unit 200, and outputs the signals to the light emitting module 1 and the processor 230. The ECU 210 controls the power supply unit 220 to supply second electric power P2 to the light emitting module 1 for achieving the lighting pattern. This allows the light emitting module 1 to achieve the lighting pattern. At this time, the power unit supply 220 outputs data representing the measured value of the second electric power P2 to the processor 230.

The operations of the processor 230 are similar to the operations of the calculation means 161 in the first embodiment. In other words, the processor 230 calculates the average value Sim_a and the difference Sim_r of the variables $\Sigma h$ of a lighting pattern, and obtains the average value Sen_a and the difference Sen_r of the temperatures based on the second electric power P2 by referencing the formulas (1) and (2) stored in the storage 240. The processor then calculates conversion factors K1 and K2 based on the average value Sim_a and the difference Sim_r of the variables $\Sigma h$ and the average value Sen_a and the difference Sen_r of the temperatures, and computes the estimated temperature value T from the variable $\Sigma h$ of each light emitting element 20 by using the conversion factors K1 and K2.

The processor 230 outputs the calculation results of the estimated temperature values T to the ECU 210. The ECU 210 evaluates the lighting pattern based on the estimated temperature values T. For example, if the estimated temperature value T of any of the light emitting elements 20 exceeded the upper limit of the tolerated range, the ECU can change the lighting pattern. Alternatively, it can reduce the value of the current applied to the light emitting element 20 which exceeded the upper limit.

According to the second embodiment, when a new lighting pattern is introduced based on the operating conditions of the automotive unit 200 and the ambient condition, whether or not the lighting pattern caused any light emitting element 20 to exceed the upper limit can be evaluated, and the lighting pattern can be changed as needed. This can prevent the thermal destruction of any light emitting element 20 in the light emitting module 1. The constituents, methods, and advantages of the second embodiment other than those described above are similar to in the first embodiment.

The embodiments described above are examples of the present invention. As such, the present invention is not limited to these embodiments. For example, those resulting from adding to, removing from, or modifying certain constituent elements or processes in the embodiments described above are also encompassed by the present disclosure. The embodiments described above, moreover, can be implemented in combination with one another.

For example, the structure of the light emitting module is not limited to the examples described above as long as a plurality of light emitting elements are included. In each of the embodiments described above, an example in which the light emitting elements 20 are arranged in a matrix was shown without limiting the present disclosure thereto. The light emitting elements 20 may be arranged, for example, in a staggered pattern or a concentric circular pattern.

Furthermore, in each of the embodiments described above, an example which employs an exponential function as the function f(d) for the amount of heat h was explained without limiting the present disclosure thereto. For example, a linear function may be used. In this case, for example, the function can be expressed as $h = h_0 - r \times d$.

Furthermore, examples in which the processor 161 estimates the temperatures of the light emitting elements 20 in the first embodiment, and the processor 230 estimates the temperatures of the light emitting elements 20 in the second embodiment have been described. However, the controller 11 provided in the wiring board 10 of the light emitting module 1 may estimate the temperatures of the light emitting elements 20. In this case, the light emitting module 1 can include a wiring board 10 and light emitting elements 20 disposed on the wiring board 10, in which the wiring board 10 has a controller 11 that estimates the temperatures of the light emitting elements 20 based on a lighting pattern of the light emitting module 1 and the electric power to be supplied to the light emitting module 1.

In the description above, moreover, an example of employing a light emitting module as a light source for a headlight of a vehicle has been explained, but the application is not limited to this. The light emitting module can be used, for example, in an image display device, lighting fixture, or the like.

Embodiments include the following aspects.

Note 1

A method for estimating a temperature of a light emitting module having a plurality of light emitting elements, the method comprising:
based on a lighting pattern of the light emitting module, which represents an intensity of light emitted from each of the light emitting elements, and the electric power to be supplied to the light emitting module, estimating respective temperatures of the light emitting elements that are operated in accordance with the lighting pattern.

Note 2

The method according to note 1, wherein said estimating respective temperatures of the light emitting elements comprises:

based on the lighting pattern of the light emitting module, calculating variables that represent the amounts of heat the respective light emitting elements have;
calculating the representative value and the value representing the variation of the variables of two or more light emitting elements; and
estimating the temperatures of all of the light emitting elements based on the predetermined relationship among the first electric power supplied to the light emitting module, the representative value and the value representing the variation of the temperatures of the two or more light emitting elements, and the second electric power to be supplied to the light emitting module for achieving the lighting pattern.

Note 3

The method according to note 2, wherein said relationship is determined by operating a test light emitting module having a temperature sensor for each of the two or more light emitting elements using multiple lighting patterns, and obtaining, for each of the lighting patterns, the first electric power supplied to the test light emitting module, the representative value and the value representing the variation of the temperatures measured by the temperature sensors.

Note 4

The method according to note 3, wherein said relationship is expressed by the formulas:

$$Sen\_a = a \times P1 + b,$$

and

$$Sen\_r = c \times Sen\_a + d,$$

wherein P1 is the first electric power supplied to the test light emitting module, Sen_a is the representative value of the temperatures measured by the temperature sensors, Sen_r is the value representing the variation of the temperatures measured by the temperature sensors, a, b, c, and d are coefficients.

## Note 5

The method according to any one of notes 2-4, wherein, in the step of estimating the temperatures of all of the light emitting elements, an actually measured value is used as the second electric power supplied to the light emitting module for achieving the lighting pattern.

## Note 6

The method according to any one of notes 2-4, wherein, in the step of estimating the temperatures of all of the light emitting elements, an estimated value based on the sum of the gradation values of the light emitting elements is used as the second electric power to be supplied to the light emitting module for achieving the lighting pattern.

## Note 7

The method according to any one of notes 2-6, wherein the two or more light emitting elements used in calculating the representative value and the value representing the variation of the variables are the same as the two or more light emitting elements used in calculating the representative value and the value representing the variation of the measured temperatures.

## Note 8

The method according to any one of notes 2-7, wherein each of the representative values is an average value.

## Note 9

The method according to any one of notes 2-8, wherein each of the values representing variation is a difference between the maximum and minimum values.

## Note 10

The method according to any one of notes 2-9, wherein:

said calculating variables includes, based on the lighting pattern, calculating the sum of the amount of heat each light emitting element receives for use as the variable by obtaining a convolution integral of the function that represents the relationship between the data representing the amount of heat a light emitting element receives from itself or another light emitting element and the data representing the distance between the light emitting element and itself or the other light emitting element, and

said estimating the temperatures of the light emitting elements includes obtaining conversion factors for converting the representative value and the value representing the variation of the variables into the representative value and the value representing the variation of the temperatures, and converting the variables for all of the light emitting elements into temperatures by using the conversion factors.

## Note 11

The method according to note 10, wherein

said function is expressed by the following formula:

$$h = h_0 \times r^d,$$

wherein h is the amount of heat received by the light emitting element or the other light emitting element, $h_0$ is the amount of heat the light emitting element receives from itself or the amount of heat the other light emitting element receives from itself, r is an attenuation rate, and d is a distance between the center of the light emitting element and the center of itself or the other light emitting element.

## Note 12

The method according to note 10 or 11, wherein

each of the representative values is an average value, each of the values representing variation is a difference between the maximum and minimum values, and
the conversion factors K1 and K2 are defined by the formulas:

$$K1 = Sen\_r/Sim\_r,$$

and

$$K2 = Sen\_a - Sim\_a \times K1,$$

wherein Sen_a is the average value of the measured temperatures of the two or more light emitting elements, Sen_r is the difference between the maximum value and the minimum value of the measured temperatures of two or more the light emitting elements, Sim_a is the average value of the respective variables of two or more light emitting elements, and Sim_r is the difference between the maximum value and the minimum value of the variables of two or more light emitting elements.

Note 13

The method according to note 12, wherein

the estimated temperature value T of the light emitting element is calculated using the following formula:

$$T = K1 \times \Sigma h + K2,$$

wherein $\Sigma h$ is the variable of the light emitting element.

Note 14

A light emitting module comprising:

a wiring board;
a plurality of light emitting elements on the wiring board; and
a controller provided in the wiring board, the controller estimating the temperatures of the light emitting elements based on a lighting pattern of the light emitting module, which represents an intensity of light emitted from each of the light emitting elements, and the electric power to be supplied to the light emitting module.

Note 15

The light emitting module according to note 14, wherein the controller is configured to:

calculate the variables representing the amounts of heat the light emitting elements respectively have based on a lighting pattern of the light emitting module;
calculate the representative value and the value representing the variation of the variables of two or more of the light emitting elements; and
estimate the temperatures of all of the light emitting elements based on the predetermined relationship among the first electric power supplied to the light emitting module, the representative value and the value representing the variation of the variables of the two or more of the light emitting elements, and the second electric power to be supplied to the light emitting module for achieving the lighting pattern.

Note 16

The light emitting module according to note 1 5, wherein the controller is configured to:

calculate the sum of the amount of heat each light emitting element receives for use as the variable by obtaining a convolution integral of the function that represents the relationship between the data representing the amount of heat a light emitting element receives from itself or another light emitting element and the data representing the distance between the light emitting element and itself or the other light emitting element based on the lighting pattern,
obtain conversion factors for converting the representative value and the value representing the variation of the variables into the representative value and the value representing the variation of the temperatures, and
convert the variables for all of the light emitting elements into temperatures by using the conversion factors.

Note 17

An automotive unit comprising:

a light emitting module including a wiring board and a plurality of light emitting elements on the wiring board; and
a controller configured to estimate the temperatures of the light emitting elements based on a lighting pattern of the light emitting module, which represents an intensity of light emitted from each of the light emitting elements, and the electric power to be supplied to the light emitting module.

Note 18

The automotive unit according to note 17, wherein the controller is configured to:

calculate variables that represent the amount of heat each of the light emitting elements has based on a lighting pattern of the light emitting module;
calculate the representative value and the value representing the variation of the variables of two or more light emitting elements; and
estimate the temperatures of all of the light emitting elements based on the predetermined relationship among the first electric power supplied to the light emitting module, the representative value and the value representing the variation of the variables of the two or more of the light emitting elements, and the second electric power to be supplied to the light emitting module for achieving the lighting pattern.

Note 19

The automotive unit according to note 18, wherein the controller is configured to: calculate, based on the lighting pattern, the sum of the amount of heat each of the light emitting elements receives for use as the variable, by obtaining a convolution integral of the function representing the relationship between the data representing the amount of heat a light emitting element receives from itself or another light emitting element and the data representing the distance between the light emitting element and itself or the other light emitting element, and

obtain conversion factors for converting the representative value and the value representing the variation of the variables into the representative value and the value representing the variation of the temperatures, and
convert the variables for all of the light emitting elements into temperatures by using the conversion factors.

Note 20

The automotive unit according to any one of notes 17-19, wherein

the light emitting module is a light source of a headlight, and
the controller is included in an electronic control unit of the vehicle.

**Claims**

1. A method for estimating a temperature of a light emitting module (1) having a plurality of light emitting elements (20), the method comprising:

based on a lighting pattern of the light emitting module, which represents an intensity of light emitted from each of the plurality of light emitting elements, determining an amount of electric power to be supplied to the light emitting module for obtaining the lighting pattern; and
based on the lighting pattern and the determined amount of electric power, calculating estimated temperatures of the plurality of light emitting elements that are operated in accordance with the lighting pattern.

2. The method according to claim 1, wherein said calculating the estimated temperatures of the plurality of light emitting elements comprises:

based on the lighting pattern of the light emitting module, calculating variables that represent estimated amounts of heat to be held by the plurality of light emitting elements, respectively;
calculating a representative value of the variables of two or more of the light emitting elements and a value representing a variation of the variables of the two or more of the light emitting elements; and
calculating the estimated temperatures of the plurality of light emitting elements, by using the determined amount of electric power and in accordance with a pre-obtained relationship among:

amounts of electric power required by a test light emitting module to obtain predetermined lighting patterns, respectively;
representative values of measured temperatures of two or more test light emitting elements of the test light emitting module, the representative values corresponding to the predetermined lighting patterns, respectively; and
values representing variations of the measured temperatures of the two or more test light emitting elements, the values corresponding to the predetermined lighting patterns, respectively.

3. The method according to claim 2, wherein the pre-obtained relationship is obtained by:

operating the test light emitting module (101) having a temperature sensor (112) for each of the two or more test light emitting elements in accordance with the predetermined lighting patterns; and
obtaining, for each of the predetermined lighting patterns, the amount of electric power required by the test light emitting module, the representative value of temperatures of the two or more test light emitting elements measured by the temperature sensors, and the value representing the variation of the temperatures measured by the temperature sensors.

4. The method according to claim 3, wherein the pre-obtained relationship is expressed by :

$$\mathrm{Sen\_a} = a \times P1 + b$$

and

$$\mathrm{Sen\_r} = c \times \mathrm{Sen\_a} + d,$$

wherein P1 is the amount of electric power required by the test light emitting module for obtaining a certain lighting pattern, Sen_a is the representative value of the temperatures measured by the temperature sensors when the test light emitting module is operated in accordance with the certain lighting pattern, Sen_r is the value representing the variation of the temperatures measured by the temperature sensors when the test light emitting module is operated in accordance with the certain lighting pattern, and a, b, c, and d are coefficients.

5. The method according to any one of claims 2-4, wherein the two or more test light emitting elements of the test light emitting module are at locations corresponding to the two or more light emitting elements of the light emitting module, respectively.

6. The method according to any one of claims 2-4, wherein

said calculating variables comprises, with respect to each of the variables, calculating a sum of an amount of heat to be generated by a corresponding light emitting element and amounts of heat conducted to the corresponding light emitting element from peripheral light emitting elements by obtaining a convolution integral of a function that represents a relationship between an amount of heat a target light emitting element receives from an operated light emitting element and a distance between the target light emitting element and the operated light emitting element, and
said calculating the estimated temperatures of the plurality of light emitting elements further comprises:

obtaining, from the pre-obtained relationship, an estimated representative value of temperatures of the two or more of the light emitting elements supplied with the electric power of the determined amount and an estimated value representing a variation of the temperatures;
obtaining conversion factors that associate the representative value of the variables of the two or more of the light emitting elements and the value representing the variation of the variables of the two or more of the light emitting elements with the estimated representative value of the temperatures and the estimated value representing the variation of the temperatures; and
converting the variables for the plurality of light emitting elements into the estimated temperatures by using the conversion factors.

7. The method according to claim 6, wherein

the function is expressed by:

$$h = h_0 \times r^d,$$

wherein h is an amount of heat received by the target light emitting element, $h_0$ is an amount of heat generated by the operated light emitting element, r is an attenuation rate, and d is a distance between a center of the target light emitting element and a center of the operated light emitting element.

8. The method according to claim 6 or 7, wherein

the representative value of the variables of the two or more of the light emitting elements is an average value of the variables, and
the representative value of the measured temperatures corresponding to each of the predetermined lighting patterns is an average value of the measured temperatures.

9. The method according to claim 8, wherein

the value representing the variation of the variables is a difference between a maximum value of the variables and a minimum value of the variables, and
the value representing variations of the measured temperatures corresponding to each of the predetermined lighting patterns is a difference between a maximum measured temperature and a minimum measured temperature.

10. The method according to claim 9, wherein the conversion factors are expressed by:

$$K1 = Sen\_r/Sim\_r,$$

and

$$K2 = Sen\_a - Sim\_a \times K1,$$

wherein K1 and K2 are conversion factors, Sen_a is an estimated average value of the temperatures of the two or more light emitting elements supplied with the electric power of the determined amount, Sen_r is an estimated difference between a maximum value and a minimum value of the temperatures of the two or more of the light emitting elements supplied with the electric power of the determined amount, Sim_a is the average value of the variables of the two or more of the light emitting elements, and Sim_r is the difference between the maximum value and the minimum value of the variables of the two or more of the light emitting elements.

11. The method according to claim 10, wherein

the estimated temperature of each of the plurality of light emitting elements is expressed by:

$$T = K1 \times \Sigma h + K2,$$

wherein T is the estimated temperature and Σh is the variable of the light emitting element.

12. The method according to any one of claims 1-11, wherein said determining the amount of electric power to be supplied to the light emitting module for obtaining the lighting pattern comprises measuring the amount of electric power that is being supplied to the light emitting module operated in accordance with the lighting pattern.

13. The method according to any one of claims 1-12, wherein said determining the amount of electric power to be supplied to the light emitting module for obtaining the lighting pattern comprises calculating an estimated amount of the electric power based on a sum of gradation values of the plurality of light emitting elements to be operated in accordance with the lighting pattern.

14. A light emitting module (1) comprising:

a wiring board (10);
a plurality of light emitting elements (20) on the wiring board; and
a controller (11) provided in the wiring board, the controller configured to:

based on a lighting pattern of the light emitting module, which represents an intensity of light emitted from each of the light emitting elements, determine an amount of electric power to be supplied to the light emitting module for obtaining the lighting pattern; and
based on the lighting pattern and the determined amount of electric power, calculate estimated temperatures of the plurality of light emitting elements that are operated in accordance with the lighting patten.

15. The light emitting module according to claim 14, wherein the controller is configured to:

based on the lighting pattern of the light emitting module, calculate variables that represent estimated amounts of heat to be held by the plurality of light emitting elements, respectively,;
calculate a representative value of the variables of two or more of the light emitting elements and a value representing a variation of the variables of the two or more of the light emitting elements; and
calculate the estimated temperatures of the plurality of light emitting elements, by using the determined amount of electric power and in accordance with a pre-obtained relationship among:

amounts of electric power required by a test light emitting module to obtain predetermined lighting patterns, respectively;
representative values of measured temperatures of two or more test light emitting elements of the test light emitting module, the representative values corresponding to the predetermined lighting patterns, respectively; and
values representing variations of the measured temperatures of the two or more test light emitting elements, the values corresponding to the predetermined lighting patterns, respectively.

16. The light emitting module according to claim 15, wherein the controller is configured to:

with respect to each of the variables, calculate a sum of an amount of heat to be generated by a corresponding light emitting element and amounts of heat conducted to the corresponding light emitting element from peripheral light emitting elements by obtaining a convolution integral of a function that represents a relationship between an amount of heat a target light emitting element receives from an operated light emitting element and a distance between the target light emitting element and the operated light emitting element;
obtain, from the pre-obtained relationship, an estimated representative value of temperatures of the two or more of the light emitting elements supplied with the electric power of the determined amount and an estimated value representing a variation of the temperatures;
obtain conversion factors that associate the representative value of the variables of the two or more of the light emitting elements and the value representing the variation of the variables of the two or more of the light emitting elements with the estimated representative value of the temperatures and the estimated value representing the variation of the temperatures; and
convert the variables for the plurality of light emitting elements into the estimated temperatures by using the conversion factors.

17. An automotive unit (200) comprising:

a light emitting module (1) including a wiring board (10) and a plurality of light emitting elements (20) on the wiring board; and
a controller (11) configured to:

based on a lighting pattern of the light emitting module, which represents an intensity of light emitted from each of the light emitting elements, determine an amount of electric power to be supplied to the light emitting module for obtaining the lighting pattern; and

based on the lighting pattern and the determined amount of electric power, calculate estimated temperatures of the plurality of light emitting elements that are operated in accordance with the lighting pattern.

18. The automotive unit according to claim 17, wherein the controller is configured to:

based on the lighting pattern of the light emitting module, calculate variables that represent estimated amounts of heat to be held by the plurality of light emitting elements, respectively,;
calculate a representative value of the variables of two or more of the light emitting elements and a value representing a variation of the variables of the two or more of the light emitting elements; and
calculate the estimated temperatures of the plurality of light emitting elements, by using the determined amount of electric power and in accordance with a pre-obtained relationship among:

amounts of electric power required by a test light emitting module to obtain predetermined lighting patterns, respectively;
representative values of measured temperatures of two or more test light emitting elements of the test light emitting module, the representative values corresponding to the predetermined lighting patterns, respectively; and
values representing variations of the measured temperatures of the two or more test light emitting elements, the values corresponding to the predetermined lighting patterns, respectively.

19. The automotive unit according to claim 18, wherein the controller is configured to:

with respect to each of the variables, calculate a sum of an amount of heat to be generated by a corresponding light emitting element and amounts of heat conducted to the corresponding light emitting element from peripheral light emitting elements, by obtaining a convolution integral of a function that represents a relationship between an amount of heat a target light emitting element receives from an operated light emitting element and a distance between the target light emitting element and the operated light emitting element;

obtain, from the pre-obtained relationship, an estimated representative value of temperatures of the two or more of the light emitting elements supplied with the electric power of the determined amount and an estimated value representing a variation of the temperatures;
obtain conversion factors that associate the representative value of the variables of the two or more of the light emitting elements and the value representing the variation of the variables of the two or more of the light emitting elements with the estimated representative value of the temperatures and the estimated value representing the variation of the temperatures; and
convert the variables for the plurality of light emitting elements into the estimated temperatures by using the conversion factors.

20. The automotive unit according to any one of claims 17-19, wherein

the light emitting module is a light source of a headlight, and
the controller is included in an electronic control unit (210) of the automotive unit.

FIG. 1

FIG. 2

FIG. 3

FIG. 4

FIG. 5

150

151

Lighting Pattern

152

101

First Electric
Power P1

Measured Temperature Values

153

Data Representing First Electric Power P1

Calculation Results

154

FIG. 6

FIG. 7

FIG. 8

Lighting Pattern

160

P 2

161

Sen_a
Sen_r

155

Estimated Temperature Values

FIG. 9

Start

Input Lighting Pattern — S1

S2 — Calculate Variable Σh Representing Amount of Heat Each Light Emitting Element Has

Calculate Second Electric Power P2 — S4

S3 — Calculate Average Value Sim_a and Difference Sim_r of Variables

Obtain Average Value Sen_a and Difference Sen_r of Temperatures — S5

Calculate Conversion Factors K1 and K2 — S6

Convert Variables Σh into Temperatures T — S7

End

FIG.10A

Lighting Percentage (%)

| 0 | 0 | 0 | 0 | 0 | 0 | 0 |
|---|---|---|---|---|---|---|
| 0 | 50 | 50 | 50 | 50 | 50 | 0 |
| 0 | 50 | 80 | 80 | 80 | 50 | 0 |
| 0 | 50 | 80 | 100 | 80 | 50 | 0 |
| 0 | 50 | 80 | 80 | 80 | 50 | 0 |
| 0 | 50 | 50 | 50 | 50 | 50 | 0 |
| 0 | 0 | 0 | 0 | 0 | 0 | 0 |

FIG.10B

Lighting Percentage (%)

| 0 | 0 | 0 | 0 | 0 | 0 | 0 |
|---|---|---|---|---|---|---|
| 20 | 40 | 60 | 80 | 60 | 40 | 20 |
| 30 | 50 | 80 | 100 | 80 | 50 | 30 |
| 30 | 50 | 80 | 100 | 80 | 50 | 30 |
| 20 | 40 | 60 | 80 | 60 | 40 | 20 |
| 0 | 0 | 0 | 0 | 0 | 0 | 0 |
| 0 | 0 | 0 | 0 | 0 | 0 | 0 |

FIG.11

FIG.12A

| 20 | | 20a | | 20b | | |
|---|---|---|---|---|---|---|
| | | | | | | |
| | | | | | | |
| | | | | | | |
| | | 100 | | 50 | | |
| | | | | | | |
| | | | | | | |
| | | | | | | |

FIG.12B

| 20 | | 20a | | 20b | | |
|---|---|---|---|---|---|---|
| 45 | 49 | 51 | 49 | 45 | 39 | 33 |
| 53 | 61 | 64 | 61 | 53 | 45 | 37 |
| 61 | 73 | 80 | 73 | 61 | 49 | 40 |
| 64 | 80 | 100 | 80 | 64 | 51 | 41 |
| 61 | 73 | 80 | 73 | 61 | 49 | 40 |
| 53 | 61 | 64 | 61 | 53 | 45 | 37 |
| 45 | 49 | 51 | 49 | 45 | 39 | 33 |

FIG.12C

| 20 | | 20a | | 20b | | |
|---|---|---|---|---|---|---|
| 16 | 19 | 22 | 25 | 26 | 25 | 22 |
| 18 | 22 | 27 | 30 | 32 | 30 | 27 |
| 20 | 25 | 30 | 36 | 40 | 36 | 30 |
| 20 | 26 | 32 | 40 | 50 | 40 | 32 |
| 20 | 25 | 30 | 36 | 40 | 36 | 30 |
| 18 | 22 | 27 | 30 | 32 | 30 | 27 |
| 16 | 19 | 22 | 25 | 26 | 25 | 22 |

FIG.12D

|  |  | 20 | | 20a | | 20b | |
|---|---|---|---|---|---|---|---|
| 61 | 69 | 74 | 74 | 70 | 63 | 55 |
| 72 | 83 | 91 | 91 | 85 | 75 | 63 |
| 81 | 98 | 110 | 109 | 101 | 86 | 70 |
| 84 | 106 | 132 | 120 | 114 | 91 | 73 |
| 81 | 98 | 110 | 109 | 101 | 86 | 70 |
| 72 | 83 | 91 | 91 | 85 | 75 | 63 |
| 61 | 69 | 74 | 74 | 70 | 63 | 55 |

FIG.13

Kernel

| 0.53 | 0.61 | 0.64 | 0.61 | 0.53 |
|---|---|---|---|---|
| 0.61 | 0.73 | 0.80 | 0.73 | 0.61 |
| 0.64 | 0.80 | 1.00 | 0.80 | 0.64 |
| 0.61 | 0.73 | 0.80 | 0.73 | 0.61 |
| 0.53 | 0.61 | 0.64 | 0.61 | 0.53 |

FIG.14

Variables Σh

| 61 | 69 | 74 | 74 | 70 | 63 | 55 |
|---|---|---|---|---|---|---|
| 72 | 83 | 91 | 91 | 85 | 75 | 63 |
| 81 | 98 | 110 | 109 | 101 | 86 | 70 |
| 84 | 106 | 132 | 120 | 114 | 91 | 73 |
| 81 | 98 | 110 | 109 | 101 | 86 | 70 |
| 72 | 83 | 91 | 91 | 85 | 75 | 63 |
| 61 | 69 | 74 | 74 | 70 | 63 | 55 |

FIG.15

Estimated Light Emitting Element Temperatures (°C)

| 115 | 120 | 123 | 123 | 121 | 116 | 112 |
|-----|-----|-----|-----|-----|-----|-----|
| 122 | 128 | 133 | 133 | 130 | 124 | 116 |
| 127 | 138 | 145 | 144 | 139 | 130 | 121 |
| 129 | 142 | 158 | 151 | 147 | 133 | 122 |
| 127 | 138 | 145 | 144 | 139 | 130 | 121 |
| 122 | 128 | 133 | 133 | 130 | 124 | 116 |
| 115 | 120 | 123 | 123 | 121 | 116 | 112 |

FIG.16

FIG.17

Europäisches
Patentamt

European
Patent Office

Office européen
des brevets

# EUROPEAN SEARCH REPORT

Application Number

EP 24 17 4707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN HUAN-TING ET AL: "Chromatic, Photometric and Thermal Modeling of LED Systems With Nonidentical LED Devices", IEEE TRANSACTIONS ON POWER ELECTRONICS, INSTITUTE OF ELECTRICAL AND ELECTRONICS ENGINEERS, USA, vol. 29, no. 12, 1 December 2014 (2014-12-01), pages 6636-6647, XP011556108, ISSN: 0885-8993, DOI: 10.1109/TPEL.2014.2302453 [retrieved on 2014-08-13] * the whole document * | 1-20 | INV. G01K7/42 G01K15/00 G01K3/06 G01K3/14 |
| X | EP 4 164 340 A1 (NICHIA CORP [JP]) 12 April 2023 (2023-04-12) * abstract * * figures 1-17 * * paragraphs [0008] - [0089] * | 1-20 | |

TECHNICAL FIELDS
SEARCHED      (IPC)

G01K
H05B

The present search report has been drawn up for all claims

| Place of search | Date of completion of the search | Examiner |
|---|---|---|
| The Hague | 8 October 2024 | Totò, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4707

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | | Publication date | Patent family member(s) | | Publication date |
|---|---|---|---|---|---|
| EP 4164340 | A1 | 12-04-2023 | CN | 115955740 A | 11-04-2023 |
| | | | EP | 4164340 A1 | 12-04-2023 |
| | | | US | 2023115310 A1 | 13-04-2023 |

EPO FORM P0459

For more details about this annex : see Official Journal of the European Patent Office, No. 12/82